# NEUE EUROPÄISCHE PATENTSCHRIFT

(11) **EP 1 509 342 B2**
(45) Veröffentlichungstag und Bekanntmachung des Hinweises auf die Entscheidung über den Einspruch: **28.10.2009**
(45) Hinweis auf die Patenterteilung: 11.10.2006
(21) Anmeldenummer: 02743133.7
(22) Anmeldetag: 31.05.2002
(51) Int. Cl.: B08B 5/04

(54) **TROCKENREINIGUNGSANLAGE FÜR WERKSTÜCKE**
DRY CLEANING SYSTEM FOR WORKPIECES
DISPOSITIF DE NETTOYAGE A SEC DE PIECES

(43) Veröffentlichungstag der Anmeldung: 02.03.2005
(73) Patentinhaber: TRT Oil-Off GmbH, 44627 Herne (DE)
(72) Erfinder: DAHMEN, Dieter, 44627 Herne (DE); DAHMEN, Harald, 44627 Herne (DE)
(74) Vertreter: Behrendt, Arne
(86) Internationale Anmeldenummer: PCT/EP2002/005959
(87) Internationale Veröffentlichungsnummer: WO 2003/101634

(56) Entgegenhaltungen:
- EP-A- 0 693 325
- WO-A-01/76777
- DE-A- 19 629 436
- DE-A- 19 633 771
- DE-A- 19 651 791
- DE-C- 19 817 813
- DE-C2- 2 843 449
- DE-C2- 3 934 095
- DE-U- 20 006 491
- 'Luftgeschwindigkeit' FIRMENSCHRIFT DEBUS Bd. 11, 1994, Seite 1,8
- 'Sicherheit von Holzbearbeitungsmaschinen - Absauganlagen für Holzstaub und Späne - Sicherheitstechnische Anforderungen und Leistungen; Deutsche Fassung EN 12779:2004' DIN EN 12779 Mai 2005, Seiten 1 - 64

## Beschreibung

Die Erfindung betrifft eine Anlage zum trockenen Reinigen von Werkstücken mit einem gasförmigen Medium durch Absaugen von anhaftenden, festen und/oder flüssigen Partikeln mit einem zu einem Absaugaggregat führenden Saugkanal und einer dem Saugkanal vorgeschalteten Leitvorrichtung, durch die der Saugstrom im Bereich der Oberfläche des Werkstücks derart geführt wird, daß an der Oberfläche des Werkstücks eine Strömung entsteht, welche die anhaftenden festen und/oder flüssigen Partikel mitreißt, wobei die Leitvorrichtung als eine das Werkstück allseitig umgebende Saugform ausgebildet ist, deren Innenkontur (4) der Außenkontur des Werkstücks folgt und zur Außenkontur des Werkstücks definierte Spalte beläßt. Eine derartige Anlage ist z. B. aus der DE 195 55 248 C2 bekannt. Bei dieser bekannten Anlage besteht die Saugform aus zwei Saugformhälften, zwischen denen sich bei geschlossener Saugform Schlitze befinden, über die das gasförmige Medium den Spalten zwischen Werkstück und Saugform zuströmt. Somit erfolgt die Zuführung des gasförmigen Mediums ausschließlich im Bereich der Trennfuge zwischen den beiden Saugformhälften.

Anlagen zum trockenen Reinigen von Werkstücken nach einer spanabhebenden Bearbeitung werden eingesetzt, um Rückstände oder Hilfsstoffe der Bearbeitung zu entfernen. Sie ersetzen zunehmend Nassverfahren, bei denen Lösungsmittel zum Einsatz kommen, die anschließend nur sehr aufwändig, wenn überhaupt, von den Rückständen zu trennen sind, um diese als Recycle-Material aufzubereiten. Hingegen können nach einer Trockenreinigung die flüssigen Rückstände, wie Emulsionen oder Schmieröl, leicht durch Feinfilter von den festen Verunreinigungen, wie Späne, getrennt und erneut für die Bearbeitung eingesetzt werden. Metallische Rückstände andererseits können als Recycle-Material aufbereitet werden.

Zu den bekannten Trockenreinigungsverfahren von Werkstücken gehört das Entfernen der Rückstände durch Abblasen mittels Düsen, die auf das Werkstück gerichtet sind (vergl. US 4 381 577). Es hat sich allerdings gezeigt, daß der Energieaufwand relativ hoch ist, um ein Luftvolumen mit dem erforderlichen Überdruck zu erzeugen, welches die Rückstände an der gesamten Oberfläche des Werkstücks entfernt. Um die Effektivität des erzeugten Luftstroms zu erhöhen, setzen andere Verfahren zusätzlich Absaugsysteme ein und/oder unterstützen das Lösen der Rückstände, indem sie das Werkstück in Vibrationen oder Rotationen versetzen (vergl. DE 295 20 880 U1 und DE 196 29 436 A1).

Ein weiteres Verfahren zur trockenen Reinigung von Werkstücken beschränkt sich auf den Einsatz von Absaugsystemen (vergl. DE 196 29 436 A1 und DE 196 33 771 C2). Durch die ungleichmäßige Strömung der abgesaugten Luft ist jedoch die vollständige Reinigung des Werkstücks auf seiner komplexen Oberfläche nur schwer realisierbar und mit einem erheblichen Energieaufwand zum Erzeugen eines hohen Volumenstroms und sehr niedrigen Drücken verbunden. Auch hier werden in der Regel zusätzliche Schwingungserzeuger eingesetzt.

Die Luftströmung durch ein Leitblech zu führen, wie dies ein weiteres Verfahren vorsieht, ist ebenfalls unzureichend (vergl. DE 196 29 436 A1). Auf diese Weise kann wohl die Strömungsgeschwindigkeit bei entsprechender Anordnung allgemein erhöht werden. Jedoch nimmt die Absaugluft den Weg des geringsten Widerstandes, das heißt sie folgt der Kontur des Leitblechs und nicht der komplexen Kontur des Werkstücks. Ein genau definiertes Strömungsverhalten an allen Punkten der Außenkontur des Werkstücks ist folglich nicht gegeben. Auch hier sind zuätzlich unterstützende Maßnahmen, wie Blasen, erforderlich. Die genannte Reinigungsvorrichtung bezieht sich auf eine Kammeranlage, in der das Werkstück außerdem gedreht werden kann. Besonders für Werkstücke mit komplexen Oberflächen bedeutet das, daß ein ausreichender Abstand zwischen Werkstück und Leitblech erforderlich ist, was wiederum die für die Reinigung ausreichende Strömung am Werkstück in Frage stellt.

Ein weiteres Verfahren ist von der DE 196 51 791 C1 bekannt. Dieses Dokument beschreibt eine Kontursaugvorrichtung mit zwei konzentrisch angeordneten, ringförmigen Kontursaugdüsen, die sich nur über einen kleinen Teil der axialen Länge des zu reinigenden Werkstücks erstrecken, welches eine rohrförmige oder hohlzylindrische Form hat. Demzufolge muss das Werkstück während des Reinigungsvorgangs axial entlang diesen ringförmigen Kontursaugdüsen bewegt werden. Das gasförmige Medium wird hier in axialer Richtung (Verschieberichtung) zwischen dem Werkstück und den ringförmigen Konturdüsen angesaugt.

Es ist Aufgabe der Erfindung, die Anlage zum trockenen Reinigen von Werkstücken der eingangs genannten Art dahingehend weiterzubilden, dass das gasförmige Medium sich optimal über die gesamte Oberfläche des Werkstücks verteilt und durch eine gezielte Zuführung des gasförmigen Mediums eine bessere Reinigung des Werkstücks erreicht wird, und zwar auch an in die Saugform hineinragenden Oberflächenbereichen des Werkstücks, wie z. B. an den Kröpfungen in einer Kurbelwellenoberfläche.

Zur Lösung dieser Aufgabe schlägt die Erfindung eine Anlage mit den Merkmalen des Patentanspruchs 1 vor.

Bei der Anlage zum trockenen Reinigen von Werkstücken gemäß der Erfindung umgibt eine Saugform das zu reinigende Werkstück. Die inneren Konturen dieser Saugform stellen gleichermaßen das Negativbild der Konturen des Werkstücks dar. Dadurch ist es möglich, die Spalte um das Werkstück herum so zu definieren, dass durch ihren Querschnitt eine zur Absaugung proportionale Strömungsgeschwindigkeit des gasförmigen Mediums herbeigeführt wird. Die Abstände zwischen Werkstück und Saugform sollen 1 mm bis 5 mm betragen. Das gasförmige Medium strömt durch Zuführschlitze und Zuführbohrungen, die an definierten Stellen in die Saugform eingebracht sind, in die Spalte zwischen Saugform und Werkstück. Dadurch wird die Strömung des gasförmigen Reinigungsmediums gezielt der Oberfläche des Werkstücks zugeführt.

Um sicherzustellen, daß das Strömungsmedium gleichmäßig die gesamte Oberfläche des Werkstücks überstreicht, soll erfindungsgemäß sowohl die Summe der Querschnitte von Zuführschlitzen und Zuführbohrungen für das gasförmige Medium als auch die Summe der Querschnitte aus den Spalten zwischen Saugform und Werkstück kleiner sein als der Öffnungsquerschnitt des Saugschlitzes, durch den das gasförmige Medium die Saugform verlässt. Der Saugschlitz muß sich mindestens über die gesamte Länge des Werkstücks erstrecken. Das beschleunigte Strömungsmedium reißt die auf dem Werkstück anhaftenden, festen und/oder flüssigen Partikel mit. Unterstützt wird dieser Vorgang durch den Druckabfall, der bei erhöhter Strömungsgeschwindigkeit eintritt.

Die Summe der Querschnitte aus Zuführschlitzen und Zuführbohrungen, an denen ein gasförmiges Strömungsmedium in die Saugform eintritt, muß einen ausreichend großen Volumenstrom zulassen. Andererseits kann ein zu großer Gesamtquerschnitt das Strömungsverhalten an der Oberfläche des Werkstücks ungünstig beeinflussen und zu ungleichmäßigem Beaufschlagen führen, so daß die Anströmgeschwindigkeit an verschiedenen Stellen des Werkstücks zu gering ist. Unter gewissen Voraussetzungen ist es vorteilhaft, das Mediums beim Zutritt in die Saugform durch entsprechend kleine Schlitze und Bohrungen vorab zu beschleunigen. Empirische und mathematische Untersuchungen haben gezeigt, daß optimale Reinigungsergebnisse zu erzielen sind, wenn die Summe der Querschnitte aus Zuführschlitzen und Zuführbohrungen für das gasförmige Medium dem 0,9fachen bis 1,2fachen der Summe der Querschnitte aller das Werkstück umgebenden Spalte zwischen Werkstück und Saugform entspricht.

Aus dieser Konstellation resultiert, daß um das Werkstück herum die Strömungsgeschwindigkeit des gasförmigen Mediums am größten ist. Vom Saugschlitz an und im nachgeschalteten Saugkanal in Richtung des Absaugaggregats stellt sich mit größeren Querschnitten eine niedrigere Strömungsgeschwindigkeit ein. Die Anschlussquerschnitte im Saugkanal und zum Absaugaggregat selbst sollte zweckmäßigerweise zusätzlich erweitert sein. Dadurch tritt eine Beruhigung der Strömung ein, was ein Ausfällen der schwereren Partikel aus den Rückständen der Bearbeitung des Werkstücks begünstigt.

Das beschleunigte Strömungsmedium im Spalt zwischen Saugform und Werkzeug reißt die Rückstände aus der Bearbeitung von der Oberfläche des Werkzeugs mit. Begünstigt wird der Effekt dadurch, daß mit erhöhter Strömungsgeschwindigkeit ein Druckabfall einhergeht, so daß ein Unterdruck entsteht. Nach empirischen Untersuchungen sind für die vorgesehenen Einsätze die besten Ergebnisse zum Ablösen von Emulsionen, Schmieröl und anderen Rückständen aus einer spanabhebenden Bearbeitung bei Strömungsgeschwindigkeiten von mindestens 20 m/s zu erwarten.

Ein Ausführungsbeispiel der Erfindung ist im folgenden anhand von Zeichnungen näher erläutert. Es zeigen:

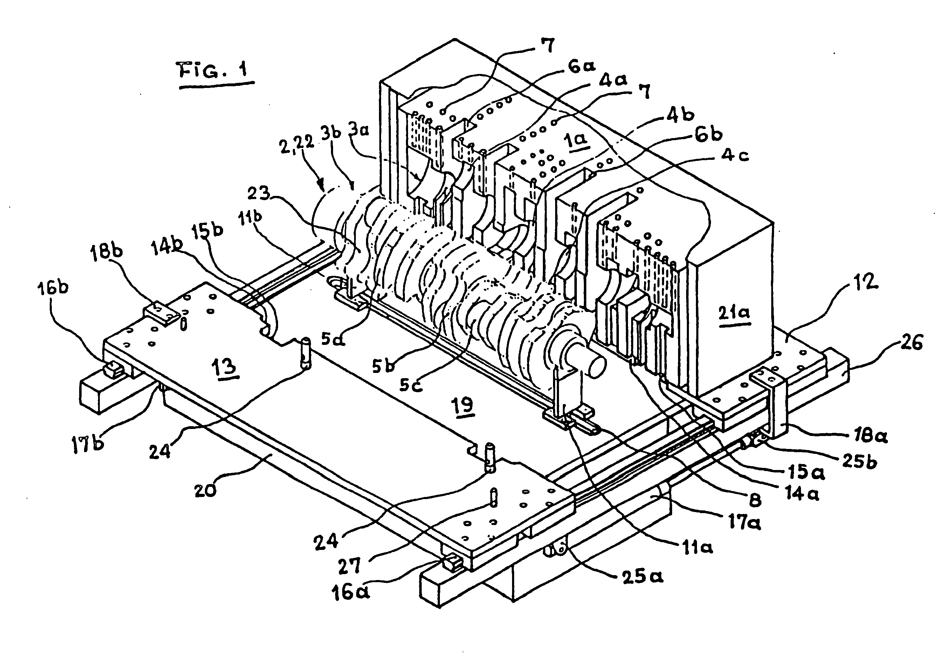

- Fig.1:: Eine perspektivische Darstellung der efindungsgemäßen Anlage zum trockenen Reinigen von Werkstücken im geöffneten Zustand.
- Fig. 2:: Eine perspektivische Darstellung einer kompletten Reinigungsstation mit der integrierten Trockenreinigungsanlage.

Die dargestellte Anlage zum trockenen Reinigen von Werkstücken 2 ist auf die Nachbehandlung von Kurbelwellen 22 ausgelegt. Sie besteht im wesentlichen aus der Saugform, von der nur eine Hälfte 1a dargestellt ist, den Schieberplatten 12, 13 mit Stellgeräten 17a, 17b, der Schallschutzhaube 21 und einer Grundplatte 19.

In der Grundplatte 19 befindet sich der Saugschlitz 8, durch den das gasförmige Reinigungsmedium, hier Luft, mit den von der Kurbelwelle abgelösten Partikeln als Rückstände aus der spanenden Bearbeitung in Richtung eines nicht dargestellten Absaugaggregats 10 gelangt. Zu beiden Seiten des Saugschlitzes 8 sind Konsolen 11a und 11b montiert, in denen die Kurbelwelle 22 relativ zur Anlage und oberhalb des Saugschlitzes 8 gelagert ist.

Die Saugform 1, von der hier nur eine Hälfte 1a dargestellt ist, wird für den Reinigungsvorgang zusammengeschoben, so dass sie die Kurbelwelle 22 umschließt. Dazu ist die Saugform 1 mit Innenkonturen 4a, 4b und 4c versehen, in welche die Kröpfungen 23 der relativ zur Saugform 1 ausgerichteten Kurbelwelle 22 mit ihren Außenkonturen 5a, 5b und 5c hineinragen. Zwischen der Saugform 1 und der Kurbelwelle 22 bleibt in dem für die Reinigung geschlossenen Zustand nur ein Abstand von 1 bis 5 mm. In die Saugform 1 eingebrachte Zuführschlitze 6 und Zuführbohrungen 7 dienen dazu, das gasförmige Strömungsmedium gezielt zu verteilen und so selbst den in die Saugform 1 hineinragenden Kröpfungen 23 der Kurbelwellenoberfläche zuzuführen.

Die Saugformhälften 1a, 1b sind leicht auswechselbar auf den Schieberplatten 12, 13 mittels Stiften 24 in dafür vorbereiteten Bohrungen zu montieren. Dadurch kann die Trockenreinigungsanlage schnell und problemlos auf andere Werkstücke als der Kurbelwelle 2 mit unterschiedlichen Ausformungen und Abmessungen, beispielsweise Nockenwellen oder auch Kurbelwellen für Motoren mit verschiedenen Zylinderzahlen, umgerüstet werden.

Die Schieberplatten 12, 13 sind auf Schienen 16a, 16b geführt verfahrbar. Dazu sind Stellgeräte 17a, 17b mit ihrem statisch fixierten Ende 25a an der Tragkonstruktion 26 der Anlage und mit dem ausfahrbaren Ende 25b über Bügel18a, 18b an den Schieberplatten 12, 13 befestigt. Durch Synchronschaltung der Stellgeräte 17a, 17b werden die Schieberplatten 12, 13 mit den Saugformhälften 1a, 1b synchron zusammenfahren und symmetrisch zum Werkstück 2 positioniert. Damit ist sichergestellt, daß die Spalte 3a, 3b zwischen der Innenkontur 4 der Saugform und der Außenkontur 5 des Werkstücks 2 für die Saugformhälfte 1a und die Saugformhälfte 1b identisch sind.

Im Bereich der Konsolen 11a, 11b zur Lagerung der Kurbelwelle 22 befinden sich in den Schieberplatten 12, 13 Ausnehmungen 15a, 15b. Durch die Ausnehmungen 14a, 14b bleibt der Querschnitt des Saugschlitzes frei, auch wenn die Schieberplatten zum Reinigungsvorgang zusammengeschoben sind.

Ebenfalls auf den Schieberplatten 12, 13 montiert ist eine zweiteilige Schallschutzhaube 21a, 21b. Sie umgibt die Saugformhälften 1a, 1b und wird mit diesen zusammen mittels der Schieberplatten so zusammengeschoben, daß nur ein definierter Spalt zum Zuströmen von Luft als Reinigungsmedium bleibt. Die Schallschutzhaube 21a, 21b ist, wie die Saugform, leicht auswechselbar mit Stiften 27 auf den Schieberplatten montiert.

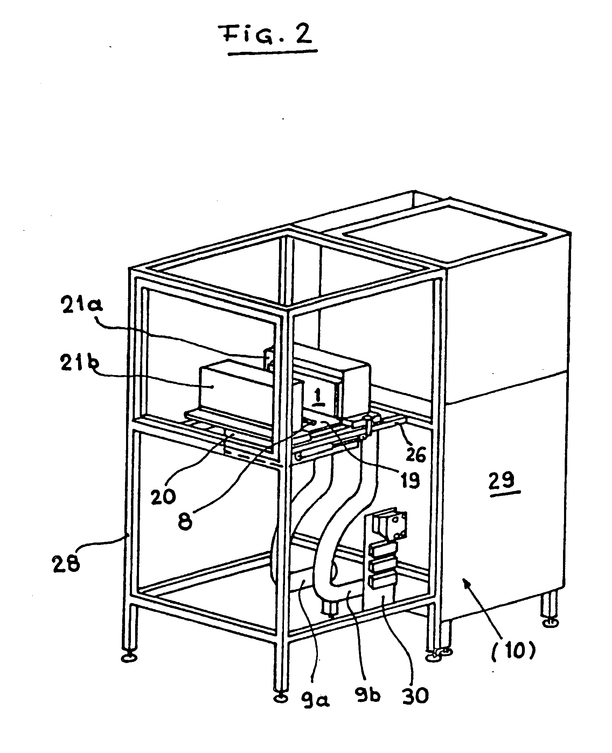

Die erfindungsgemäße Trockenreinigungsanlage ist, wie in Fig. 2 schematisch dargestellt, auf dem Traggerüst 28 einer Reinigungsstation montiert. Ein Auffangbehälter 20 unterhalb der Grundplatte 19 fängt zunächst die Rückstände aus dem Reinigungsmedium auf. Hieran angeschlossen sind zwei Saugkanäle oder Schläuche 9a, 9b, durch die das Reinigungsmedium in einen nicht im Detail dargestellten Sammelbehälter 29 gelangt. Eine Schalttafel 30 mit verschiedenen Steuer- und Regelelementen ermöglicht weitere Einstellungen zur optimalen Funktion der Anlage.

## Patentansprüche

1. Anlage zum trockenen Reinigen von Werkstücken mit einem gasförmigen Medium durch Absaugen von anhaftenden, festen und/oder flüssigen Partikeln mit einem zu einem Absaugaggregat (10) führenden Saugkanal (9) und einer dem Saugkanal vorgeschalteten Leitvorrichtung, durch die der Saugstrom im Bereich der Oberfläche des Werkstücks (2) derart geführt wird, daß an der Oberfläche des Werkstücks eine Strömung entsteht, welche die anhaftenden festen und/oder flüssigen Partikel mitreißt, wobei die Leitvorrichtung als eine das Werkstück allseitig umgebende Saugform (1) ausgebildet ist, deren Innenkontur (4) der Außenkontur des Werkstücks (5) folgt und zur Außenkontur des Werkstücks definierte Spalte (3) beläßt, **dadurch gekennzeichnet, daß** das gasförmige Medium den Spalten (3) über Zuführschlitze (6) und Zuführbohrungen (7) in der Saugform (1) zuströmt, wobei die Spalte (3) einerseits und die Zuführschlitze (6) und Zuführbohrungen (7) andererseits so ausgestaltet, angeordnet und bemessen sind, daß die Strömungsgeschwindigkeit des gasförmigen Mediums an der Oberfläche des Werkstücks (2) überall mehr als 20 m/s beträgt.

2. Anlage nach Anspruch 1, **dadurch gekennzeichnet, daß** der Saugkanal (9) mit dem Innenraum der Saugform (1) über einen Saugschlitz (8) in Verbindung steht, der sich mindestens über die gesamte Länge des Werkstücks (2) erstreckt.

3. Anlage nach Anspruch 1 oder 2, **dadurch gekennzeichnet, daß** der Saugschlitz (8) und der sich anschließende Saugkanal (9) jeweils größere Querschnitte haben, als die Summe der Querschnitte aller das Werkstück umgebenden Spalte (3) zwischen Werkstück (2) und Saugform (1) und die Summe der Querschnitte aus Zuführschlitzen (6) und Zuführbohrungen (7) für das gasförmige Medium.

4. Anlage nach Anspruch 1 bis 3, **dadurch gekennzeichnet, daß** die Summe der Zuführschlitze (6) und Zuführbohrungen (7) für das gasförmige Medium dem 0,9fachen bis 1,2fachen der Summe aller das Werkstück umgebenden Spalte (3) zwischen Werkstück (2) und Saugform (1) entspricht.

5. Anlage nach Anspruch 1 bis 3, **dadurch gekennzeichnet, daß** die Konturen (4) der Saugform (1) den Konturen (5) des Werkstücks (2) mit einem Abstand zwischen 1 mm und 5 mm folgen.

6. Anlage nach einem oder mehreren der Ansprüche 1 bis 5, **dadurch gekennzeichnet, daß** das Absaugaggregat (10) eine flache Kennlinie hat und mit einer Unterdruck von 50 mbar bis 100 mbar arbeitet.

7. Anlage nach Anspruch 1, **dadurch gekennzeichnet, daß** die Saugform (1) aus zwei Hälften (1a, 1b) besteht.

8. Anlage nach den Ansprüchen 1 oder 7, **dadurch gekennzeichnet, daß** die Saugform (1) oder die Saugformhälften (1a, 1b) auf Schieberplatten (12, 13) montiert sind, die relativ zu dem Werkstück (2) von Halterungen (18a, 18b) gehalten, verschiebbar sind.

9. Anlage nach Anspruch 8, **dadurch gekennzeichnet, daß** die Schieberplatten (12, 13) Ausnehmungen (14a, 14b und 15a, 15b) aufweisen, welche das vollständige Zusammenfahren erlauben und lediglich den Saugschlitz (8) freilassen.

10. Anlage nach Anspruch 8, **dadurch gekennzeichnet, daß** die Schieberplatten (12, 13) auf Schienen (16a, 16b) geführt sind.

11. Anlage nach Anspruch 8, **dadurch gekennzeichnet, daß** die Stellgeräte (17a, 17b) synchron geschaltet sind, um die Schieberplatten (12, 13) mit den Saugformhälften (1a, 1b) synchron an das Werkstück (2) und den Saugschlitz (8) heranzufahren undsomitdie Saugformhälften symmetrisch zum Werkstück positionieren.

12. Anlage nach einem der Ansprüche 7 bis 11, **dadurch gekennzeichnet, daß** die Saugform (1) während des Reinigungsvorgangs von einer Schallschutzhaube (21) umgeben ist.

13. Anlage nach Anspruch 12, **dadurch gekennzeichnet, daß** die Schallschutzhaube (21) aus zwei Hälften (21a, 21b) besteht, die wie die Saugformhälften (1a, 1b) auf den verfahrbaren Schieberplatten (12, 13) montiert sind.

14. Anlage nach Anspruch 13, **dadurch gekennzeichnet, daß** die Schallschutzhaube (21) das Zuströmen eines gasförmigen Mediums zulässt.

## Claims

1. An installation for the dry cleaning of workpieces with a gaseous medium by sucking away adhering, solid and/or liquid particles, comprising a suction passage (9) leading to a suction removal assembly (10) and a guide device which is disposed upstream of the suction passage and by which the suction flow is guided in the region of the surface of the workpiece (2) in such a way that at the surface of the workpiece there is produced a flow which entrains the adhering, solid and/or liquid particles, wherein the guide device is in the form of a suction mould (1) which surrounds the workpiece on all sides and the internal contour (4) of which follows the external contour of the workpiece (5) and leaves defined gaps (3) in relation to the external contour of the workpiece, **characterised in that** the gaseous medium flows to the gaps (3) by way of feed slots (6) and feed bores (7) in the suction mould (1), wherein the gaps (3) on the one hand and the feed slots (6) and feed bores (7) on the other hand are of such a configuration, arrangement and dimension that the flow speed of the gaseous medium at the surface of the workpiece (2) is everywhere more than 20 m/s.

2. An installation according to claim 1 **characterised in that** the suction passage (9) is in communication with the internal space of the suction mould (1) by way of a suction slot (8) which extends at least over the entire length of the workpiece.

3. An installation according to claim 1 or claim 2 **characterised in that** the suction slot (8) and the adjoining suction passage (9) are each of larger cross-sections than the sum of the cross-sections of all gaps (3) surrounding the workpiece between the workpiece (2) and the suction mould (1) and the sum of the cross-sections of feed slots (6) and feed bores (7) for the gaseous medium.

4. An installation according to claims 1 to 3 **characterised in that** the sum of the feed slots (6) and feed bores (7) for the gaseous medium corresponds to 0.9 times to 1.2 times the sum of all gaps (3) surrounding the workpiece between the workpiece (2) and the suction mould (1).

5. An installation according to claims 1 to 3 **characterised in that** the contours (4) of the suction mould (1) follow the contours (5) of the workpiece (2) at a spacing of between 1 mm and 5 mm.

6. An installation according to one or more of claims 1 to 5 **characterised in that** the suction removal assembly (10) has a flat characteristic curve and operates with a reduced pressure of 50 mbar to 100 mbar.

7. An installation according to claim 1 **characterised in that** the suction mould (1) comprises two halves (1a, 1b).

8. An installation according to claims 1 or 7 **characterised in that** the suction mould (1) or the suction mould halves (1a, 1b) are mounted on slider plates (12, 13) which are displaceable relative to the workpiece (2), held by holders (18a, 18b).

9. An installation according to claim 8 **characterised in that** the slider plates (12, 13) have openings (14a, 14b and 15a, 15b) which allow them to be completely moved together and only leave the suction slot (8) free.

10. An installation according to claim 8 **characterised in that** the slider plates (12, 13) are guided on rails (16a, 16b).

11. An installation according to claim 8 **characterised in that** the control devices (17a, 17b) are switched synchronously in order to move the slider plates (12, 13) with the suction mould halves (1a, 1b) synchronously to the workpiece (2) and the suction slot (8) and thus to position the suction mould halves symmetrically with respect to the workpiece.

12. An installation according to one of claims 7 to 11 **characterised in that** the suction mould (1) is surrounded during the cleaning operation by a sound protection hood (21).

13. An installation according to claim 12 **characterised in that** the sound protection hood (21) comprises two halves (21a, 21b) which are mounted like the suction mould halves (1a, 1b) on the displaceable slider plates (12, 13).

14. An installation according to claim 13 **characterised in that** the sound protection hood (21) permits the feed flow of a gaseous medium.

## Revendications

1. Installation de nettoyage à sec de pièces avec un milieu gazeux par aspiration de particules qui adhèrent, solides et/ou liquides avec un canal d'aspiration (9) menant vers un appareil d'aspiration (10) et un dispositif de guidage disposé en amont du canal d'aspiration, par lequel le flux d'aspiration est guidé dans la zone de la surface de la pièce (2) de telle sorte qu'il se produit à la surface de la pièce un écoulement qui entraîne les particules solides et/ou liquides qui adhèrent, où le dispositif de guidage est réalisé comme un moule d'aspiration (1) entourant de tous côtés la pièce, dont le contour intérieur (4) suit le contour extérieur de la pièce (5) et laisse subsister relativement au contour extérieur de la pièce des fentes définies (3), **caractérisée en ce que** le milieu gazeux s'écoule vers les fentes (3) par des fentes d'amenée (6) et des perçages d'amenée (7) dans le moule d'aspiration (1), les fentes (3), d'une part, et les fentes d'amenée (6) et perçages d'amenée (7) étant configurés, disposés et dimensionnés, d'autre part, de façon que la vitesse d'écoulement du milieux gazeux à la surface de la pièce (2) soit partout supérieure à 20 m/s.

2. Installation selon la revendication 1, **caractérisée en ce que** le canal d'aspiration (9) est en liaison avec l'espace intérieur du moule d'aspiration (1) par une fente d'aspiration (8) qui s'étend au moins sur toute la longueur de la pièce (2).

3. Installation selon la revendication 1 ou 2, **caractérisée en ce que** la fente d'aspiration (8) et le canal d'aspiration (9) qui fait suite ont à chaque fois des sections transversales plus grandes que la somme des sections transversales de toutes les fentes (3) entourant la pièce entre la pièce (2) et le moule d'aspiration (1) et la somme des sections transversales formée par des fentes d'amenée (6) et des perçages d'amenée (7) pour le milieu gazeux (1).

4. Installation selon la revendication 1 à 3, **caractérisée en ce que** la somme des fentes d'amenée (6) et des perçages d'amenée (7) pour le milieu gazeux correspond à 0,9 jusqu'à 1,2 fois la somme de toutes les fentes (3) entourant la pièce entre la pièce (2) et le moule d'aspiration (1).

5. Installation selon les revendications 1 à 3, **caractérisée en ce que** les contours (4) du moule d'aspiration (1) suivent les contours (5) de la pièce (2) avec un écart entre 1 mm et 5 mm.

6. Installation selon l'une ou plusieurs des revendications 1 à 5, **caractérisée en ce que** l'appareil d'aspiration (10) possède une ligne caractéristique plate et fonctionne à une dépression de 50 mbar à 100 mbar.

7. Installation selon la revendication 1, **caractérisée en ce que** le moule d'aspiration (1) est constitué de deux moitiés (1a, 1b).

8. Installation selon les revendications 1 ou 7 **caractérisée en ce que** le moule d'aspiration (1) ou les moitiés de moule d'aspiration (1a, 1b) sont montées sur des plaques de poussée (12, 13) qui sont déplaçables relativement à la pièce (2), en étant retenues par des supports (18a, 18b).

9. Installation selon la revendication 8, **caractérisée en ce que** les plaques de poussée (12, 13) présentent des évidements (14a, 14b et 15a, 15b) qui permettent la réunion complète et laissent subsister uniquement la fente d'aspiration (8).

10. Installation selon la revendication 8, **caractérisée en ce que** les plaques de poussée (12, 13) sont guidées sur des rails (16a, 16b).

11. Installation selon la revendication 8, **caractérisée en ce que** les appareils de positionnement (17a, 17b) sont montés d'une manière synchrone pour amener les plaques de poussée (12, 13) avec les moitiés de moule d'aspiration (1a, 1b) d'une manière synchrone à la pièce (2) et à la fente d'aspiration (8) et pour positionner ainsi les moitiés de moule d'aspiration d'une manière symétrique à la pièce.

12. Installation selon l'une des revendications 7 à 11, **caractérisée en ce que** le moule d'aspiration (1), pendant l'opération de nettoyage, est entouré par un capot d'isolation acoustique (21).

13. Installation selon la revendication (12) **caractérisée en ce que** le capot d'isolation acoustique (21) est constitué de deux moitiés (21a, 21b) qui sont montées, tout comme les moitiés de moule d'aspiration (1a, 1b), sur les plaques de poussée déplaçables (12, 13).

14. Installation selon la revendication 13, **caractérisée en ce que** le capot d'isolation acoustique (21) permet l'afflux d'un milieu gazeux.
